# EUROPEAN PATENT SPECIFICATION

(11) **EP 0 557 101 B1**
(45) Date of publication and mention of the grant of the patent: **17.04.1996**
(21) Application number: 93301205.6
(22) Date of filing: 18.02.1993
(51) Int. Cl.: B60C 9/28, B60C 9/20, B60C 3/04, B60C 11/00

(54) **Heavy duty radial tyre**
Radialer LKW-Luftreifen
Bandage pneumatique radial pour poids-lourds

(30) Priority: 21.02.1992 JP 72614/92
(43) Date of publication of application: 25.08.1993
(73) Proprietor: SUMITOMO RUBBER INDUSTRIES LIMITED, Kobe-shi Hyogo-ken (JP)
(72) Inventor: Fujiwara, Kenichi, Shijimi-cho, Miki-shi, Hyogo-ken (JP); Yamahira, Atsushi, Kobe-shi, Hyogo-ken (JP)
(74) Representative: Stewart, Charles Geoffrey

(56) References cited:
- EP-A- 0 318 128
- DE-A- 2 644 452
- DE-A- 4 122 058
- FR-A- 2 557 513
- FR-A- 2 566 334
- FR-A- 2 647 716
- GB-A- 2 198 996

## Description

The present invention relates to a pneumatic tyre for heavy duty use such as a truck or bus tyre, and more particularly to a belted radial tyre having a low tyre aspect ratio of from 0.5 to 0.7, in which uneven tread wear, high-speed durability, and changes in the foot print or shape of the ground contacting area in use are improved.

Recently, radial tyres are widely used for heavy duty tyres such as truck and bus tyres.

In general, a heavy duty radial tyre is provided radially outwards of the radial carcass with a stiff belt made of steel cords, and a round carcass profile has been used to withstand the very high inner pressure, compared to passenger car tyres, thereby resulting in a higher aspect ratio.

In such heavy duty radial tyres, the tread is liable to wear unevenly between the tread crown and the tread shoulders.

The main cause of such uneven wear is known to be uneven ground pressure distribution, and the cause of such uneven distribution is known to be the small radius of curvature of the tread profile. When the tread radius is small, the ground pressure is higher in the tread crown than the tread shoulder, and the amount of slip against the ground is larger in the shoulders of the tread. As a result, shoulder wear is caused.

In order to even the ground pressure distribution, heretofore, the tread radius has been increased to provide a flat tread profile by increasing the tread rubber thickness in the tread shoulder.

In this method, however, it is very difficult to control the ground pressure distribution, and the ground pressure is liable to increase in the tread shoulders, which again results in uneven wear. Further, because of the increased rubber thickness, heat generation increases in the tread shoulders, which induces belt ply edge separation from the surrounding rubber and decreases high speed durability.

Recently, heavy duty radial tyres have moved towards lower aspect ratios similarly to passenger car tyres. In a heavy duty radial tyre having a low aspect ratio of less than 0.7, uneven wear is especially liable to occur.

In order to achieve a low aspect ratio, the carcass inflation is restricted by the belt.

As the heavy duty radial tyre is usually used under severe service conditions, the belt is subjected to a very large force in comparison with passenger car tyres, and such a force is even larger when the aspect ratio is lower.

As a result, the shape of the ground contacting area of the tread or foot print is changed in use, which disturbs the ground pressure distribution and increases uneven wear, and the high speed durability is decreased.

On the other hand, truck and bus tyres are often retreaded to be used repeatedly. In a normal retreading process, the worn tread rubber is removed automatically along a programmed curvature or a convex profile by machinery. Therefore, if a tyre having a belt having edges which are radially outwardly curved is included, the belt of such a tyre is damaged, and the yield of successful retreading is decreased. Thus, a truck/bus tyre must be designed paying attention to the yield of retreading.

A heavy duty tyre according to the preamble of claim 1 is known, for example, from EP-A-0557101 which discloses a tyre according to the preamble of claim 1 with improved shoulder wear. GB-A-2198996 discloses a radial tyre comprising a breaker having a crown radius of curvature which is smaller than the shoulder radius of curvature in the condition that the tyre is inflated to 25% of the scheduled pressure and mounted on its scheduled rim.

It is therefore, an object of the present invention to provide a radial tyre for heavy duty use, in which uneven wear between the tread crown and tread shoulder is effectively reduced without deteriorating high speed durability, and the change in the ground contacting area shape in use is decreased.

According to one aspect of the present invention, a heavy duty radial tyre comprises a tread portion with a curved tread profile, a pair of axially spaced bead portions each with a bead core disposed therein, a carcass comprising at least one carcass ply extending between the bead portions and turned up around the bead cores, a belt comprising a plurality of belt plies, including a widest ply, disposed radially outside the carcass and inside the tread portion, said widest belt ply having a curved radially inner surface, the tread profile being made of an arc having a centre on the tyre equator, characterised by the tyre having an aspect ratio being in the range of 0.5 to 0.7 said arc having a radius of curvature TR being 1.85 to 2.35 times the maximum tyre cross sectional width TW, the width BWM of said widest belt ply being 0.74 to 0.8 times the maximum tyre cross sectional width TW, each axially outer portion of said radially inner surface of the widest ply having a single radius of curvature BR of 2.25 to 2.8 times the maximum tyre cross sectional width TW, each said axially outer portion extending from each ply edge thereof to a middle point between said ply edge and the tyre equator, and each said axially outer portion being smoothly connected to an axially inner portion of said radially inner surface, said axially inner portion extending from the middle point on one side of the tyre equator to that on the other side of the tyre equator.

Here, the regular rim is the rim officially approved for the tyre by the Tire and Rim Association Inc. (USA), the European Tyre and Rim Technical Organisation (Europe) and the like, and the regular inner pressure is the maximum air pressure for the tyre officially specified in the Air pressure/Max. load Tables by the same association or organisation.

An embodiment of the present invention will now be described in detail in conjunction with the accompanying drawings, in which:
Fig.1 is a cross sectional view of a right half of a tyre according to the present invention;
Fig.2 is a graph showing high speed durability as a function of BWM/TW ratio and BR/TW ratio;
Fig.3 is a graph showing initial change in the ground contacting area shape as function of BWM/TW ratio and BR/TW ratio;
Fig.4 is a diagram showing the initial changes in the ground contacting area shape; and
Fig.5 is a graph showing uneven wear as a function of BR/TW ratio and TR/TW ratio.

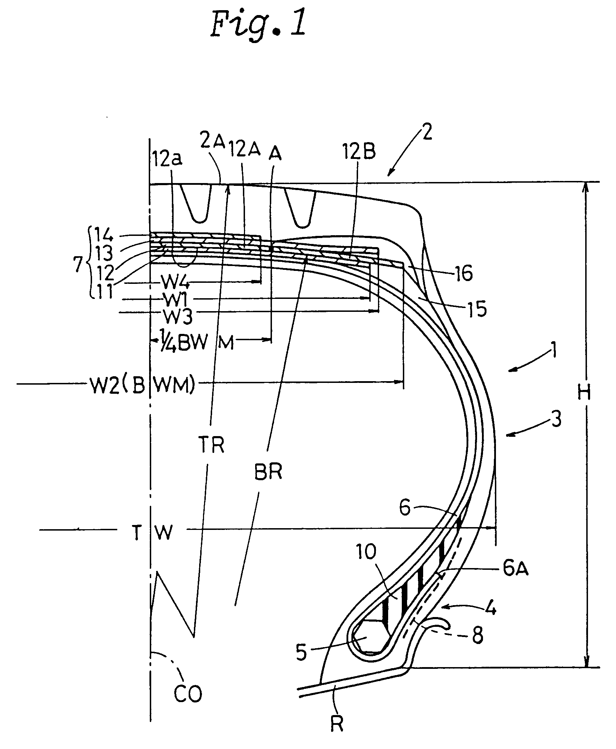

In Fig.1, a heavy duty radial tyre 1 comprises a tread portion 2, a pair of axially spaced bead portions 4,a pair of sidewalls 3 extending radially inwardly from the tread edges to the bead portions, a pair of bead cores 5 disposed one in each bead portion 4, a carcass 6 turned up around the bead cores 5 from the axially inside to the outside of the tyre to be secured thereto, and a belt 7 disposed radially outside the carcass 6.

Fig.1 shows the normal state of the tyre that is mounted on its regular rim R and inflated to its regular inner pressure.

In this embodiment, the carcass 6 is composed of one ply of cords arranged radially at an angle of 90 degrees with respect to the tyre equator CO. The carcass is turned up around the bead cores 5 so that the turned up portions 6A are terminated radially outwards of the bead cores 5 and inwards of the maximum tyre width position.

For the carcass cords, steel cords are used. The carcass may be constructed as a radial structure or a semiradial structure by arranging the carcass cords at an angle within the range of 60 to 90 degrees. In addition to steel cords, organic fibre cords, e.g. aromatic polyamide, nylon, rayon, polyester or the like can be used for the carcass cords as a plurality of plies.

Each of the bead portions 4 is provided with a bead apex 10 made of rubber tapering radially outwardly from the bead core 5 to improve the lateral rigidity of the bead portion.

The bead portion 4 can be provided with a reinforcing layer for increasing the bead rigidity and preventing abrasion of the carcass 6 by the bead cores 5 due to relative movement therebetween, a chafer for preventing the bead from being chafed by the rim, and a reinforcing layer for covering the carcass turned up edge, each not shown.

In this embodiment, the belt 7 comprises a first belt ply 11, a second belt ply 12, a third belt ply 13, and a narrow fourth belt ply 14, which are disposed in that order from the carcass 6 to the tread portion 2.

The axial width W2 of the second belt ply 12 is larger than the axial width W1 of the first belt ply 11.

The axial width W3 of the third belt ply 13 is substantially the same as the width W1.

The axial width W4 of the fourth belt ply 14 is 55 to 90 % of the width W3 of the third belt ply 13.

Therefore, the second belt ply 12 has the largest width BWM.

The first belt ply 11 is disposed on the outer surface of the carcass 6, but the axially outer edge portions thereof are separated therefrom.

The second belt ply 12 is disposed on the outer surface of the first belt ply, and the edges extend beyond the first ply edges.

The third belt ply 13 is disposed on the outer surface of the second belt ply 12, but the axially outer edge portions are separated therefrom.

The fourth belt ply 14 is disposed on the third belt ply 13 to protect the radially inner belt plies 13, 12 and 11 from external injury.

In order to mitigate stress concentration on the belt ply edges to thereby prevent ply edge separation failure, rubber cushions 15 and 16 are disposed so as to cover the belt ply edges.

The rubber for the cushions 15 and 16 is such that the carbon content is small, the sulfur content is large, and the loss tangent is small in comparison with the tread rubber. Preferably, the loss tangent is less than 0.08.

For the belt cords of the first, second and third belt plies 11, 12 and 13, steel cords and organic fibre cords, e.g. aromatic polyamide, nylon, rayon, polyester or the like can be used. In the fourth belt ply 14, steel cords are preferably used.

The belt cords are laid at an angle of 5 to 70 degrees with respect to the tyre equator CO.

In this embodiment, the belt cords of the first belt ply 11 are inclined at an angle of 50 to 70 degrees with respect to the tyre equator CO.

The belt cords of the second belt ply 12 are inclined at an angle of 14 to 22 degrees with respect to the tyre equator CO in the same direction as that of the first belt cords.

The belt cords of the third belt ply 13 are inclined at an angle of 14 to 22 degrees with respect to the tyre equator CO in the opposite direction to that of the second belt cords.

Accordingly, the second belt cords cross the third belt cords, and the first belt cords are inclined in the same direction as the second belt cords, which mitigates a shear strain which is caused between the first and second belt plies 11 and 12 by the tyre deformation during running.

Further, between the belt plies 11, 12 and 13, the belt cords are crossed with respect to each other, thereby a triangular cord arrangement is formed, and a tight belt effect is obtained through the whole belt width.

Furthermore, the cord angle of the first belt ply 11 is set at an intermediate value between the cord angle of the carcass 7 and the cord angle of the second belt ply 12, thereby the rigidity difference between the carcass 7 and the belt 9 is decreased, and separation failure can be reduced.

The profile 2A of the tread portion 2 is formed by an arc having a centre on the tyre equatorial plane CO. Excepting the tread edges, the tread profile 2A has a single radius of curvature TR of 1.85 to 2.35 times the maximum tyre cross sectional width TW.

The tread portion 2 can be further provided with a band belt (not shown) made of organic fibre cords laid at a relatively small angle to the tyre equator so as to cover the axial edges of the belt 7.

Given an axially inner portion 12A and a pair of axially outer portions 12B of the radially inner surface of the widest belt ply or the second belt ply 12, each of the axially outer portions 12B is formed by an arc of a single radius of curvature BR having a centre on the tyre equatorial plane.

The axially inner portion 12A is formed by an arc of a single radius of curvature having a centre on the tyre equatorial plane, which radius is the same as BR in this embodiment, but it may be different.

Further, the axially inner portion 12A and the axially outer portions 12B are smoothly continued or blended at the middle points (A).

Here, the axially inner portion 12A is defined as extending between a pair of middle points (A) located one on each side of the tyre equator CO, each of the middle points (A) being spaced apart form the tyre equator CO by a distance of 1/4 times the width BWM of the belt ply 12. Each of the axially outer portions 12B is defined as extending from each middle point A to each tread edge.

Usually, the aspect ratio of a tyre affects the magnitude of the force to which the belt is subjected. When the aspect ratio is smaller, the tread portion is damaged earlier. Further, when the aspect ratio is smaller, the tread portion wears earlier even if heat generation is the same level. Therefore, in order to improve high speed running performance of a tyre, the width of a belt must be defined according to the aspect ratio of the tyre.

According to the present invention, the aspect ratio, which is defined as the ratio of the tyre section height H to the maximum cross sectional width TW, is in the range of 0.5 to 0.7, and the width BWM of the widest belt ply is set in the range of 0.74 to 0.8 times the maximum cross sectional width TW.

Further, the radius of curvature BR of the axially outer portions 12B is set to be in the range of 2.25 to 2.8 times the maximum cross sectional width TW.

Incidentally, such a radius can be measured by means of an X-ray CT scanner.

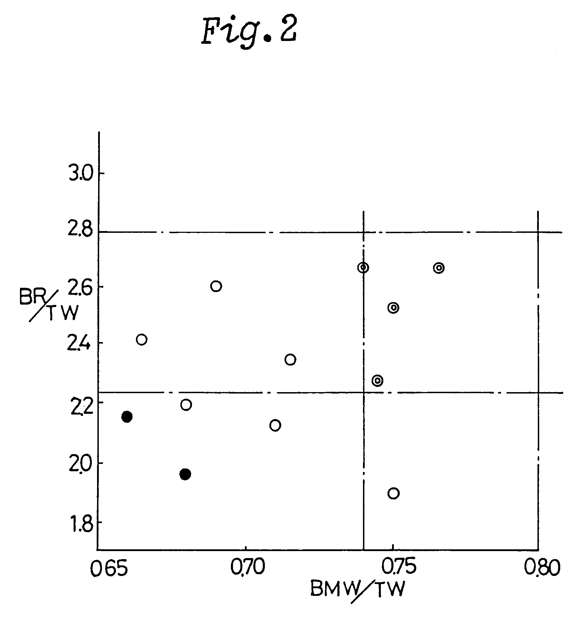

Fig.2 shows the results of high speed durability tests, wherein the ratio BWM/TW and the ratio BR/TW were varied.

Using a drum tester, the running speed of each test tyre was increased every two hours in steps of 10km/Hr from an initial speed of 70km/Hr, and then the speed at which the tread shoulder was cut or alternatively the tread rubber was broken by the generated heat, was measured as the high speed durability.

The radius of curvature TR of the tread face was set at a constant value of 2.0 times the tyre width TW. The tyre size was 385/65R22.5.

Each test tyre was mounted on a regular rim and inflated to the regular presser. The tyre load was 140% of the regular load (4250 kg).

In Fig. 2, a solid circle mark denotes 90km/Hr, a single circle mark denotes 100km/Hr and a double circle mark denotes 110km/Hr.

It was confirmed that the high speed durability can be improved be by satisfying both the conditions: the ratio BWM/TW being not less than 0.74; and the ratio BR/TW being not less than 2.25.

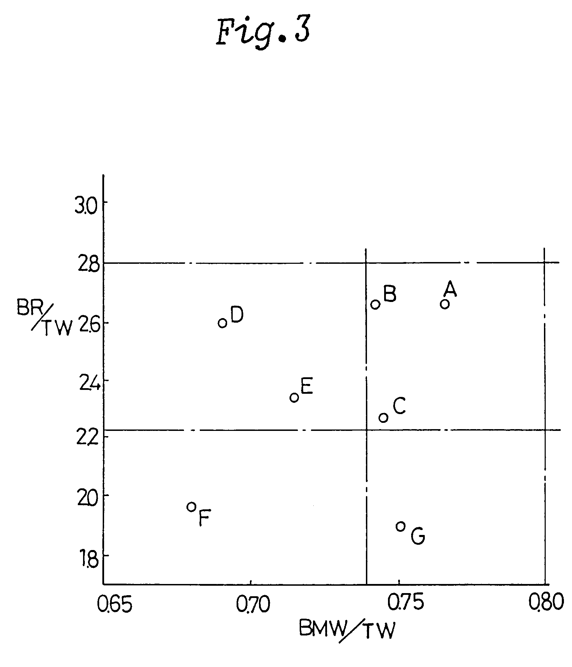

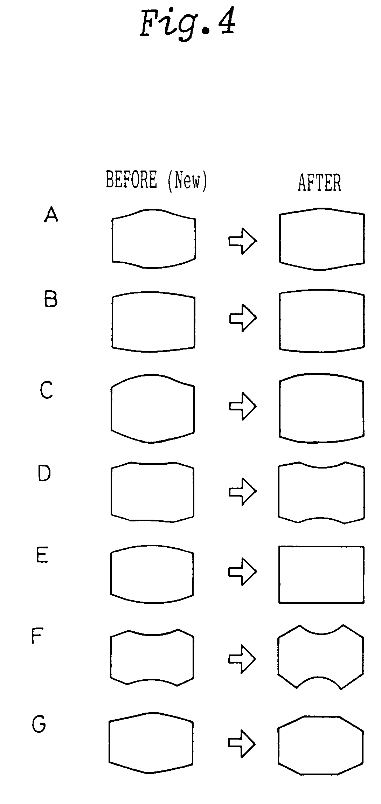

Figs.3 and 4 show the results of tests for an initial change in the shape of the ground contacting area from the new tyre state to the used tyre state by running for a certain distance.

In the tests, as shown in Fig.3, the ratio BWM/TW and the ratio BR/TW were varied.

Using a drum tester, each test tyre was run at a constant speed of 50km/Hr for ten hours. The shapes of the ground contacting area were measured before and after running to obtain the change thereof, which are shown in Fig.4.

The radius of curvature TR of the tread face was a constant value of 2.0 times the tyre width TW. The tyre size was 385/65R22.5. Each test tyre was mounted on a regular rim and inflated to a regular pressure. The tyre load was 140% of the regular load (4250 kg).

In the tests, the tyres A, B and C, the ratio BWM/TW of which was not less than 0.74 and the ratio BR/TW of which was not less than 2.25, had less change in comparison with the tyres D, E, F and G which did not satisfy those conditions.

Accordingly, it was also confirmed that, by setting the BWM/TW ratio and BR/TW ratio not less than 0.74 and not less than 2.25 respectively, the initial change in the ground contacting area shape can be reduced to stabilise the running performance, and the heat generation in the tread shoulder region and cutting damage are reduced to improve high speed durability.

When the ratio BWM/TW is more than 0.8, the rubber thickness between the belt ply edge and the outer surface of the sidewall buttress portion becomes small, and a tread rubber separation and belt edge separation are liable to occur.

Further, by setting the ratio BWM/TW not more than 0.74, the damage in the tread shoulder region can be effectively prevented.

When the ratio BWM/TW is less than 0.74, the shoulder rigidity decreases and high speed durability is reduced.

On the other hand, when the ratio BR/TW is less than 2.25, uneven wear is produced in the tread shoulder region.

When the ratio BR/TW is more than 2.8, the belt ply edges locate close to the tread face, and the yield of retreading is decreased.

Therefore, setting the above-mentioned ratio BR/TW set in the range of 2.25 to 2.8 according to the invention gives an advantage.

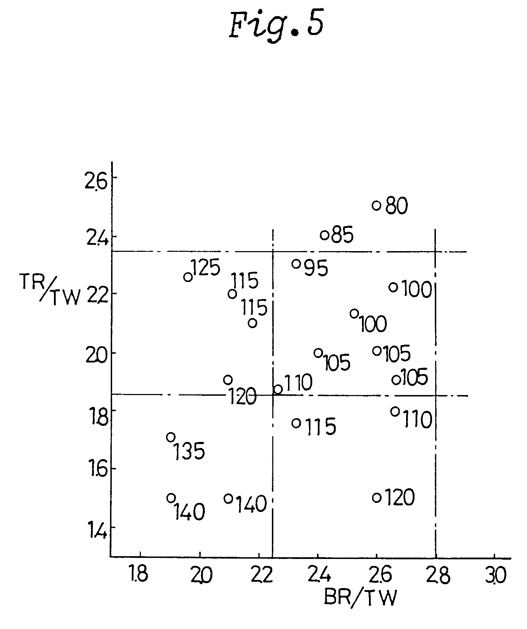

Fig.5 shows the results of tests for uneven wear between the central part and shoulder part of the tread, wherein the ratio BR/TW and ratio TR/TW were varied.

Each test tyre was provided on a test vehicle and run for 100,000km. Then, the amount of wear was measured in the central part and shoulder part to obtain the percentage of the wear amount in the shoulder part to the wear amount in the central part, which percentage is shown in Fig. 5.

The tyre size was 385/65R22.5.

When the ratio TR/TW is less than 1.85, the wear in the shoulder part becomes larger than the wear in the central part. Especially, tread edge wear is liable to occur.

When the ratio TR/TW is more than 2.35, the tread central part wears rapidly.

Thus by satisfying those conditions, the radial deformation of the tread portion when contacting with the ground occurs smoothly from the central part to the shoulder part, and the amount of deformation is decreased, and as a result the ground pressure distribution is evened to reduce uneven wear.

For the steering stability, rolling resistance, wear resistance, hoop effect and the like, at least three cross plies of the above-mentioned belt plies are preferably disposed within the width of the ground contacting area which is produced when the tyre is mounted on its regular rim and inflated to its regular pressure and then loaded with its regular load.

As described above, in the heavy duty radial tyre of the present invention, heat generation in the tread shoulder portions is reduced, and uneven wear in the tread shoulder portions is reduced to even tread wear, and the change in the ground contacting area shape is reduced to stabilise the running performance.

## Claims

1. A heavy duty radial tyre comprising a tread portion (2) with a curved tread profile (2A), a pair of axially spaced bead portions (4) each with a bead core (5) disposed therein, a carcass (6) comprising at least one carcass ply extending between the bead portions (4) and turned up around the bead cores (5), a belt (7) comprising a plurality of belt plies (11-14), including a widest ply (12), disposed radially outside the carcass (6) and inside the tread portion (2), said widest belt ply (12) having a curved radially inner surface, the tread profile (2A) being made of an arc having a centre on the tyre equator (CO), characterised by the tyre having an aspect ratio (H/TW) being in the range of 0.5 to 0.7said arc having a radius of curvature TR being 1.85 to 2.35 times the maximum tyre cross sectional width TW, the width BWM of said widest belt ply (12) being 0.74 to 0.8 times the maximum tyre cross sectional width TW, each axially outer portion (12B) of said radially inner surface of the widest ply (12) having a single radius of curvature BR of 2.25 to 2.8 times the maximum tyre cross sectional width TW, each said axially outer portion (12B) extending from each ply edge thereof to a middle point (A) between said ply edge and the tyre equator (CO), and each said axially outer portion (12B) being smoothly connected to an axially inner portion (12A) of said radially inner surface, said axially inner portion (12A) extending from the middle point (A) on one side of the tyre equator to that on the other side of the tyre equator (CO).

2. A heavy duty radial tyre according to claim 1, characterised in that said belt (7) comprises a radially inner belt ply (11), a widest middle belt ply (12) and a radially outer belt ply (13), the belt cords of said radially inner belt ply (11) are inclined at an angle of 50 to 70 degrees with respect to the tyre equator CO, the belt cords of said middle belt ply (12) are inclined at an angle of 14 to 22 degrees with respect to the tyre equator CO in the same direction as that of the inner belt ply cords, and the belt cords of said radially outer belt ply (13) are inclined at an angle of 14 to 22 degrees with respect to the tyre equator CO in the opposite direction to that of the middle belt ply cords.

3. A heavy duty radial tyre according to claim 2, characterised in that the radially inner belt ply (11) is disposed on the outer surface of the carcass (6), but the axially outer edges thereof are separated therefrom, the middle belt ply (12) is disposed on the outer surface of the radially inner belt ply (11) and the edges thereof extend beyond the inner belt ply edges, and the radially outer belt ply (13) is disposed on the outer surface of the middle belt ply (12), but the axially outer edges thereof are separated therefrom.

## Patentansprüche

1. Ein Schwereinsatzradialreifen mit einem Laufstreifenabschnitt (2) mit einem gekrümmten Laufstreifenprofil (2A), einem Paar von axial beabstandeten Wulstabschnitten (4), in denen jeweils ein Wulstkern (5) angeordnet ist, einer Karkasse (6) mit wenigstens einer Karkassenlage, die sich zwischen den Wulstabschnitten (4) erstreckt und um die Wulstkerne (5) umgeschlagen ist, und einem Gürtel (7) mit einer Vielzahl von Gürtellagen (11-14) mit einer breitesten Lage (12), die radial außerhalb der Karkasse (6) und innerhalb des Laufstreifenabschnitts (2) angeordnet sind, wobei die breiteste Gürtellage (12) eine gekrümmte radial innere Oberfläche aufweist und das Laufstreifenprofil (2A) aus einem Bogen besteht, der ein Zentrum auf dem Reifenäquator (CO) aufweist,
dadurch **gekennzeichnet,**
daß der Reifen ein Aspektverhältnis (H/TW) aufweist, das im Bereich von 0,5 bis 0,7 liegt, der Bogen einen Krümmungsradius TR aufweist, der das 1,85- bis 2,35-fache der maximalen Reifenquerschnittsbreite TW beträgt, die Breite BWM der breitesten Gürtellage (12) das 0,74- bis 0,8-fache der maximalen Reifenquerschnittsbreite TW beträgt, jeder axial äußere Abschnitt (12B) der radial inneren Oberfläche der breitesten Lage (12) einen einzelnen Krümmungsradius BR vom 2,25- bis 2,8-fachen der maximalen Reifenquerschnittsbreite TW aufweist, jeder axial äußere Abschnitt (12B) sich von jeder seiner Lagenkanten zu einem Mittelpunkt (A) zwischen der Lagenkante und dem Reifenäquator (CO) erstreckt, jeder axial äußere Abschnitt (12B) glatt mit einem axial inneren Abschnitt (12A) der radial inneren Oberfläche verbunden ist, und der axial innere Abschnitt (12A) sich vom Mittelpunkt (A) auf der einen Seite des Reifenäquators zu jenem auf der anderen Seite des Reifenäquators (CO) erstreckt.

2. Ein Schwereinsatzradialreifen nach Anspruch 1,
dadurch **gekennzeichnet,**
daß der Gürtel (7) eine radial innere Gürtellage (11), eine breiteste mittlere Gürtellage (12) und eine radial äußere Gürtellage (13) umfaßt, die Gürtelkorde der radial inneren Gürtellage (11) unter einem Winkel von 50 bis 70 Grad bezüglich des Reifenäquators CO geneigt sind, die Gürtelkorde der mittleren Gürtellage (12) unter einem Winkel von 14 bis 22 Grad bezüglich des Reifenäquators CO in der gleichen Richtung wie die inneren Gürtellagenkorde geneigt sind, und die Gürtelkorde der radial äußeren Gürtellage (13) unter einem Winkel von 14 bis 22 Grad bezüglich des Reifenäquators CO in der entgegengesetzten Richtung wie die mittleren Gürtellagenkorde geneigt sind.

3. Ein Schwereinsatzradialreifen nach Anspruch 2,
dadurch **gekennzeichnet,**
daß die radial innere Gürtellage (11) auf der äußeren Oberfläche der Karkasse (6) angeordnet ist, jedoch deren axial äußeren Kanten davon getrennt sind, die mittlere Gürtellage (12) auf der äußeren Oberfläche der radial inneren Gürtellage (11) angeordnet sind und deren Kanten sich über die inneren Gürtellagenkanten hinaus erstrecken, und die radial äußere Gürtellage (13) auf der äußeren Oberfläche der mittleren Gürtellage (12) angeordnet ist, jedoch deren axial äußeren Kanten davon getrennt sind.

## Revendications

1. Pneumatique à carcasse radiale pour poids lourds, comprenant une partie (2) de bande de roulement ayant un profil courbe (2A), deux parties (4) de talon distantes axialement, comprenant chacune une tringle (5) placée à l'intérieur, une carcasse (6) comprenant au moins une nappe de carcasse placée entre les parties (4) de talon et repliée autour des tringles (5), une ceinture (7) comportant plusieurs nappes (11-14), comprenant une nappe la plus large (12), disposée radialement à l'extérieur de la carcasse (6) et à l'intérieur de la partie de bande de roulement (2), la nappe la plus large (12) de ceinture ayant une surface radialement interne courbe, le profil (2A) de bande de roulement étant formé par un arc de cercle dont le centre se trouve sur l'équateur (CO) du pneumatique, caractérisé en ce que le pneumatique a un rapport d'allongement (H/TW) compris entre 0,5 et 0,7, l'arc de cercle ayant un rayon de courbure TR compris entre 1,85 et 2,35 fois la largeur maximale en coupe du pneumatique TW, la largeur BWM de la nappe la plus largeur (12) de la ceinture étant comprise entre 0,74 et 0,8 fois la largeur maximale en coupe TW du pneumatique, chaque partie axialement externe (12B) de la surface radialement interne de la nappe la plus large (12) ayant un rayon de courbure unique BR compris entre 2,25 et 2,8 fois la largeur maximale en coupe TW du pneumatique, chaque partie axialement externe (12B) étant disposée du bord de nappe correspondant à un point médian (A) compris entre le bord de la nappe et l'équateur (CO) du pneumatique, et chaque partie axialement externe (12B) étant raccordée progressivement à une partie axialement interne (12A) de la surface radialement interne, la partie axialement interne (12A) étant placée du point médian (A) d'un côté de l'équateur du pneumatique à celui de l'autre côté de l'équateur (CO) du pneumatique.

2. Pneumatique à carcasse radiale pour poids lourds selon la revendication 1, caractérisé en ce que la ceinture (7) comporte une nappe radialement interne (11), une nappe médiane la plus large (12) et une nappe radialement externe (13) de ceinture, les câblés de ceinture de la nappe radialement interne (11) sont inclinés d'un angle compris entre 50 et 70° par rapport à l'équateur CO du pneumatique, les câblés de la nappe médiane (12) sont inclinés d'un angle compris entre 14 et 22° par rapport à l'équateur CO du pneumatique dans le même sens que les câblés de la nappe interne, et les câblés de la nappe radialement externe (13) sont inclinés d'un angle compris entre 14 et 22° par rapport à l'équateur CO du pneumatique dans le sens opposé à celui des câblés de la nappe médiane.

3. Pneumatique à carcasse radiale pour poids lourds selon la revendication 2, caractérisé en ce que la nappe radialement interne (11) de ceinture est placée à la surface externe de la carcasse (6), mais ses bords axialement externes en sont séparés, la nappe médiane (12) de ceinture est placée à la surface externe de la nappe radialement interne (11) de ceinture et ses bords dépassent au-delà des bords de la nappe interne, et la nappe radialement externe (13) de ceinture est placée à la surface externe de la nappe médiane (12) de ceinture, mais ses bords axialement externes en sont séparés.
